# EUROPEAN PATENT SPECIFICATION

(11) **EP 4 387 215 B1**
(45) Date of publication and mention of the grant of the patent: **29.07.2026**
(21) Application number: 23170371.1
(22) Date of filing: 27.04.2023
(51) Int. Cl.: H04M 3/42, H04M 1/72412, H04M 1/60, H04M 1/72403

(54) **CALL CONTROL METHOD AND APPARATUS, STORAGE MEDIUM, AND CHIP**
ANRUFSTEUERUNGSVERFAHREN UND -VORRICHTUNG, SPEICHERMEDIUM UND CHIP
PROCÉDÉ ET APPAREIL DE COMMANDE D'APPEL, SUPPORT D'INFORMATIONS ET PUCE

(30) Priority: 13.12.2022 CN 202211601631
(43) Date of publication of application: 19.06.2024
(73) Proprietor: Beijing Xiaomi Mobile Software Co., Ltd., Beijing 100085 (CN)
(72) Inventor: ZHU, Tangcan, Beijing, 100085 (CN); ZHOU, Tengteng, Beijing, 100085 (CN); CHEN, Lei, Beijing, 100085 (CN)
(74) Representative: dompatent

(56) References cited:
- CN-B- 111 818 503
- US-A1- 2022 201 113

## Description

### TECHNICAL FIELD

The disclosure relates to the technical field of calls, and particularly relates to a call control method and apparatus, a storage medium, and a chip.

### BACKGROUND

In order to satisfy people's demand for the convenience of electronic devices, most headsets on the market have functions of answering, hanging up and rejecting calls, and allow users to answer, hang up and reject calls to terminals accordingly.

US2022/0201113A1 discloses a BLUETOOTH connection system including a BLUETOOTH headset, and a first electronic device and a second electronic device that have been paired with the BLU. ETOOTH headset. The BLUETOOTH headset is configured to establish a first connection to the first electronic device, where the first connection includes an asynchronous connection-oriented link (ACL) connection. The BLUETOOTH headset is further configured to send a BLUETOOTH Low Energy (BLE) broadcast message. The second electronic device is configured to establish a second connection to the BLUETOOTH headset after receiving the BLE broadcast message. Furthermore, CN111818503 discloses more details about synchronous connections between a Bluetooth headset and one or more mobile devices.

### SUMMARY

In order to solve problems in the related art, the disclosure provides a call control method and apparatus, a storage medium, and a chip, as defined by the appended claims.

A first aspect of the disclosure provides a call control method. The method is performed by a terminal and includes:
transmitting an incoming call message to an audio processing apparatus through a first application;
receiving a first response message returned from the audio processing apparatus based on the incoming call message through the first application, wherein the first response message includes any one of a first answer message, a first hang-up message, or a first rejection message; and
responding to the first response message through the first application, and executing an operation corresponding to the first response message on a second application;
wherein transmitting the incoming call message to the audio processing apparatus through the first application includes:
   transmitting the incoming call message to a Bluetooth device through the first application, wherein the Bluetooth device is configured to synchronize the incoming call message to the audio processing apparatus; and the Bluetooth device and the audio processing apparatus establish a virtual synchronous connection oriented link in response to determining that the incoming call message is received;
   wherein the virtual synchronous connection oriented link is different from a wireless link established between the Bluetooth device and the audio processing apparatus, and the virtual synchronous connection oriented link is disconnected after the audio processing apparatus executes a rejection operation or a hang-up operation, while the wireless link between the Bluetooth device and the audio processing apparatus remains connected.

Optionally, responding to the first response message through the first application, and executing the operation corresponding to the first response message on the second application includes:
connecting the first application with the second application and instructing the audio processing apparatus to switch to an active state by responding to the first answer message through the first application, wherein the audio processing apparatus is capable of responding to a hang-up operation of a user in the active state.

Optionally, responding to the first response message through the first application, and executing the operation corresponding to the first response message on the second application includes:
disconnecting the first application from the second application by responding to the first hang-up message through the first application.

Optionally, responding to the first response message through the first application, and executing the operation corresponding to the first response message on the second application includes:
rejecting a connection with the second application by responding to the first rejection message through the first application.

Optionally, the method further includes:
responding to a second response message through the first application, and executing an operation corresponding to the second response message on the second application, wherein the second response message is a response message generated after a user executes a touch operation on the first application, and the second response message includes any one of a second answer message, a second hang-up message, or a second rejection message.

Optionally, responding to the second response message through the first application, and executing the operation corresponding to the second response message on the second application includes:
connecting the first application with the second application and instructing the audio processing apparatus to switch to an active state by responding to the second answer message through the first application, wherein the audio processing apparatus is capable of responding to a hang-up operation of the user in the active state.

Optionally, responding to the second response message through the first application, and executing the operation corresponding to the second response message on the second application includes:
disconnecting the first application from the second application by responding to the second hang-up message through the first application.

Optionally, responding to the second response message through the first application, and executing the operation corresponding to the second response message on the second application includes:
rejecting a connection with the second application by responding to the second rejection message through the first application.

Optionally, the method further includes:
instructing a Bluetooth device to disconnect a virtual synchronous connection oriented link with the audio processing apparatus through the first application, wherein the audio processing apparatus switches to an idle state in response to determining that the virtual synchronous connection oriented link between the audio processing apparatus and the Bluetooth device is disconnected.

A second aspect of the disclosure provides a call control method. The method is performed by an audio processing apparatus and includes:
receiving an incoming call message transmitted from a first application; and
returning a first response message to the first application based on the incoming call message, wherein the first response message includes any one of a first answer message, a first hang-up message, or a first rejection message, and the first response message is configured to instruct the first application to execute an operation corresponding to the first response message;
wherein receiving the incoming call message transmitted from the first application includes:
   in response to the incoming call message transmitted from the first application through a Bluetooth device, entering an incoming call state; and
   establishing a virtual synchronous connection oriented link between the Bluetooth device and the audio processing apparatus in response to determining that the Bluetooth device and the audio processing apparatus are in the incoming call state;
   wherein the virtual synchronous connection oriented link is different from a wireless link established between the Bluetooth device and the audio processing apparatus, and the virtual synchronous connection oriented link is disconnected after the audio processing apparatus executes a rejection operation or a hang-up operation, while the wireless link between the Bluetooth device and the audio processing apparatus remains connected.

Optionally, the method further includes:
in response to an answer instruction transmitted from the first application, switching to an active state, wherein the audio processing apparatus is capable of responding to a hang-up operation of a user in the active state.

Optionally, the method further includes:
in response to disconnection of a virtual synchronous connection oriented link between Bluetooth device and the audio processing apparatus, switching to an idle state.

A third aspect of the disclosure provides a call control apparatus. The apparatus is performed by a terminal and includes:
an incoming call message transmission module configured to transmit an incoming call message to an audio processing apparatus through a first application;
a first response message reception module configured to receive a first response message returned from the audio processing apparatus based on the incoming call message through the first application, wherein the first response message includes any one of an answer message, a hang-up message, or a rejection message; and
a control module configured to respond to the first response message through the first application, and execute an operation corresponding to the first response message on a second application;
wherein the incoming call message transmission module includes:
   an incoming call message transmission sub-module configured to transmit the incoming call message to a Bluetooth device through the first application, wherein the Bluetooth device is configured to synchronize the incoming call message to the audio processing apparatus; and the Bluetooth device and the audio processing apparatus establish a virtual synchronous connection oriented link in response to determining that the incoming call message is received;
   wherein the virtual synchronous connection oriented link is different from a wireless link established between the Bluetooth device and the audio processing apparatus, and the virtual synchronous connection oriented link is disconnected after the audio processing apparatus executes a rejection operation or a hang-up operation, while the wireless link between the Bluetooth device and the audio processing apparatus remains connected.

A fourth aspect of the disclosure provides a call control apparatus. The apparatus is performed by an audio processing apparatus and includes:
an incoming call message reception module configured to receive an incoming call message transmitted from a first application; and
a first response message transmission module configured to return a first response message to the first application based on the incoming call message, wherein the first response message includes any one of a first answer message, a first hang-up message, or a first rejection message, and the first response message is configured to instruct the first application to execute an operation corresponding to the first response message;
wherein the incoming call message reception module includes:
   an incoming call state entering sub-module configured to enter an incoming call state in response to the incoming call message transmitted from the first application through a Bluetooth device; and
   a virtual synchronous connection oriented link establishment sub-module configured to establish a virtual synchronous connection oriented link between the Bluetooth device and the audio processing apparatus in response to determining that the Bluetooth device and the audio processing apparatus are in the incoming call state;
   wherein the virtual synchronous connection oriented link is different from a wireless link established between the Bluetooth device and the audio processing apparatus, and the virtual synchronous connection oriented link is disconnected after the audio processing apparatus executes a rejection operation or a hang-up operation, while the wireless link between the Bluetooth device and the audio processing apparatus remains connected.

A fifth aspect of the disclosure provides a call control apparatus. The apparatus includes:
a processor, and
a memory configured to store a processor executable instruction,
wherein the processor is configured to:
   implement steps of the call control method according to the first aspect of the disclosure by executing the executable instruction.

A sixth aspect of the disclosure provides an audio processing apparatus. The apparatus includes:
a processor, and
a memory configured to store a processor executable instruction,
wherein the processor is configured to:
   implement steps of the call control method according to the second aspect of the disclosure by executing the executable instruction.

A seventh aspect of the disclosure provides a non-transitory computer-readable storage medium, which stores a computer program instruction, wherein the program instruction implements steps of the call control method according to the first aspect of the disclosure or implements steps of the call control method according to the second aspect of the disclosure when executed by a processor.

An eighth aspect of the disclosure provides a chip, which includes a processor and an interface, wherein the processor is configured to execute steps of the call control method according to the first aspect of the disclosure or execute steps of the call control method according to the second aspect of the disclosure by reading an instruction.

The technical solution according to the examples of the disclosure may have the following beneficial effects:
after the terminal transmits the incoming call message to the audio processing apparatus through the first application, the user may trigger an answer button and a rejection button on the audio processing apparatus, and may further trigger a hang-up button after triggering the answer button; the first application may also receive the first response message generated after the user triggers different buttons; and the operation corresponding to the first response message is executed on the second application, such that different call states are achieved. In this way, the user may control the first application to execute operations corresponding to the first response messages, such as the first answer message, the first rejection message and the first hang-up message, on the audio processing apparatus, and does not have to manually click on the first application and then execute the corresponding operations, which brings convenience to the user.

It is to be understood that the above general description and the following detailed description are merely illustrative and explanatory, and cannot limit the disclosure.

### BRIEF DESCRIPTION OF THE DRAWINGS

The accompanying drawings here are incorporated in the description as a constituent part of the description, illustrate examples conforming to the disclosure and serve to describe principles of the disclosure together with the description.
FIG.1 is a flow diagram of a call control method according to an example;
FIG.2 is a schematic diagram of interaction of a call control method according to an example;
FIG.3 is a schematic diagram of interaction of a call control method according to an example;
FIG.4 is a schematic diagram of interaction of a call control method according to an example;
FIG.5 is a flow diagram of a call control method according to an example;
FIG.6 is a block diagram of a call control apparatus according to an example;
FIG.7 is a block diagram of a call control apparatus according to an example;
FIG.8 is a block diagram of a call control apparatus according to an example; and
FIG.9 is a block diagram of a call control apparatus according to an example.

### DETAILED DESCRIPTION

Examples will be described in detail here and shown in the accompanying drawings illustratively. When the following descriptions involve the accompanying drawings, unless otherwise specified, the same numeral in different accompanying drawings denotes the same or similar elements. The embodiments described in the following examples do not denote all embodiments consistent with the disclosure. On the contrary, the embodiments are merely examples of an apparatus and a method consistent with some aspects of the disclosure as detailed in the appended claims.

It is to be noted that all actions of obtaining signals, information or data in the present application are conducted under the premise of complying with corresponding data protection laws and policies of the current country and obtaining authorization from a corresponding apparatus owner.

In general, users may answer, hang up and reject calls on the terminals through headsets. However, before attending online conferences on various office software or responding to WeChat phone calls with the headsets, the users still have to manually click on office software and enter an interface of the office software for answering, hanging up or rejecting touch operation, which brings inconvenience to the users.

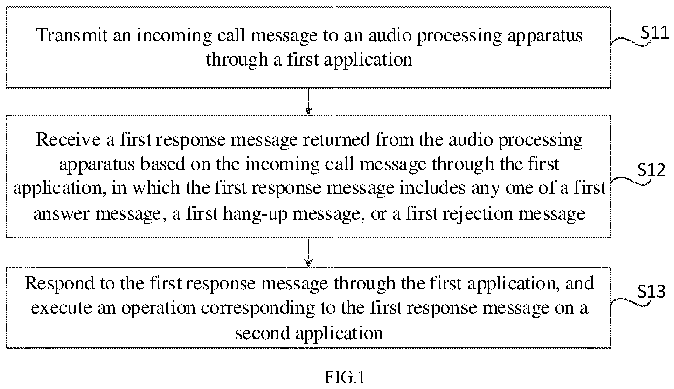

FIG.1 is a flow diagram of a call control method according to an example. As shown in FIG. 1, the call control method is performed by a terminal and includes steps as follows.

In step S11, an incoming call message is transmitted to an audio processing apparatus through a first application.

The first application may be Miwork, WeChat, Feishu, DingTalk, or other software with audio and video calling functions. The call control method provided in the disclosure may be applied to any software with audio and video calling functions. The audio processing apparatus may be an apparatus for processing audio data, and may not only play audio output from the first application after the first application answers a call, but may collect sound output from a sound source (the sound source may be sound output from a user or another sound source), convert the sound into audio, and transmit the audio to the first application. An audio processing apparatus may be a headset, and the headset may also be a Bluetooth headset or a wired headset.

The incoming call message is a request from a user who uses a second application to make a call with a user who uses the first application. The first application and the second application are of the same type, both of which are WeChat or Miwork for example. The first application and the second application provided in the disclosure are used for indicating that two pieces of software of the same type are configured in different terminals.

For example, terminal A is configured with Miwork (the first application), and terminal B is also configured with Miwork (the second application). When a user uses the Miwork of the terminal B to request a call with the Miwork of the terminal A, Miwork of the terminal A may receive an incoming call message transmitted from the terminal B, the Miwork of the terminal A further transmits the incoming call message to a headset connected with the terminal A, and the headset receives the incoming call message from the terminal B.

In step S12, a first response message returned from the audio processing apparatus based on the incoming call message is received through the first application, wherein the first response message includes any one of a first answer message, a first hang-up message, or a first rejection message.

After the terminal transmits the incoming call message to the audio processing apparatus through the first application, the user may trigger an answer button and a rejection button on the audio processing apparatus. After the user triggers the answer button to make a voice call, the user may also trigger a hang-up button on the audio processing apparatus. After the user triggers the answer button on the audio processing apparatus, the audio processing apparatus may return the first answer message to the first application. After the user triggers the rejection button on the audio processing apparatus, the audio processing apparatus may return the first rejection message to the first application. After the user triggers the hang-up button on the audio processing apparatus, the audio processing apparatus may return the first hang-up message to the first application.

In the process, the audio processing apparatus directly or further feeds the first answer message, the first rejection message or the first hang-up message back to the first application based on receiving the incoming call message.

The first response message reflects a functional button triggered by the user on the audio processing apparatus.

In step S13, the first application responds to the first response message, and an operation corresponding to the first response message is executed on a second application.

After the terminal receives the first response message through the first application, the operation corresponding to the first response message may be executed through the first application. According to different first different response messages received by the first application, the first application executes different operations.

For example, after the terminal receives the first answer message through the first application, the first application may determine that the audio processing apparatus accepts a call request from the second application. In this case, an answer operation may be executed, the first application is connected with the second application, and further a voice call is made. After the terminal receives the first rejection message through the first application, the first application may determine that the audio processing apparatus rejects a call request from the second application. In this case, a rejection operation may be executed to reject a connection between the first application and the second application.

Through the technical solution, after the terminal transmits the incoming call message to the audio processing apparatus through the first application, the user may trigger the answer button and the rejection button on the audio processing apparatus, and may further trigger the hang-up button after triggering the answer button; the first application may also receive the first response message generated after the user triggers different buttons; and the operation corresponding to the first response message is executed on the second application, such that different call states are achieved.

In a possible embodiment, an entire call flow between the headset and the Miwork may include the following two scenarios, each of which has a different call flow.

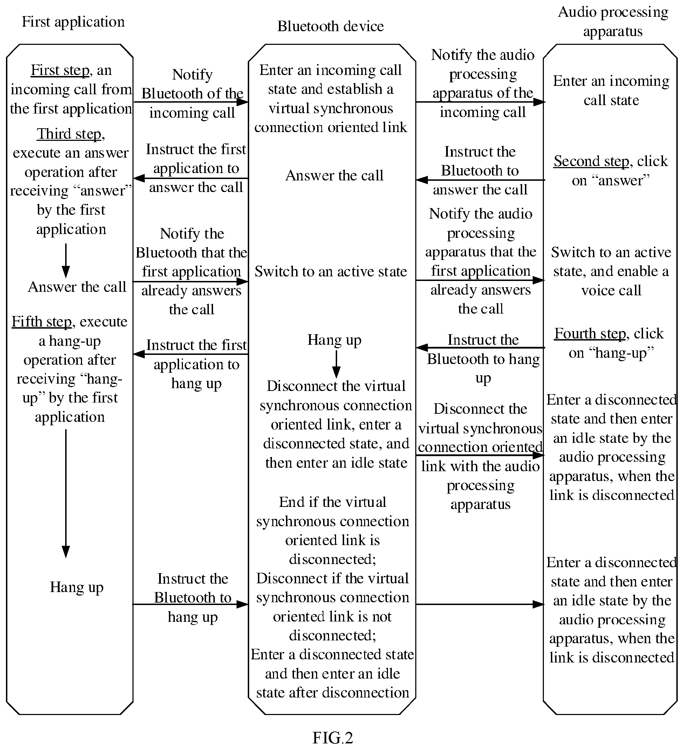

Scenario 1: with reference to FIG.2, the scenario in which the user answers a call and then hangs up through the audio processing apparatus includes the following flow:
the incoming call message is transmitted to a Bluetooth device through the first application, wherein the Bluetooth device is configured to synchronize the incoming call message to the audio processing apparatus; and the Bluetooth device and the audio processing apparatus establish a virtual synchronous connection oriented link in response to determining that the incoming call message is received.

After the first application receives an incoming call request transmitted from the second application, the first application calls a Bluetooth interface (e.g. an interface provided by Bluetooth headset), and transmits the incoming call message (which is also regarded as an incoming call state) to the Bluetooth device through a phone state change function.

When the Bluetooth device receives the incoming call message transmitted from the first application, the incoming call message may be synchronized to the audio processing apparatus, and the Bluetooth device and the audio processing apparatus may switch from an idle state to the incoming call state in response to the incoming call message. In addition, the Bluetooth device and the audio processing apparatus establish the virtual synchronous connection oriented (SCO) link in the incoming call state, and the Bluetooth device and the audio processing apparatus may transmit audio data in response to determining that the virtual synchronous connection oriented link is established (a process of transmitting the incoming call message by the first application is a process in which the first application notifies the Bluetooth device and the audio processing apparatus of an incoming call in the first step in FIG.2).

For example, after the Bluetooth device and the headset establish a virtual synchronous connection oriented link, the first application transmits an incoming call ring tone to the audio processing apparatus through the Bluetooth device, such that a user who wears the audio processing apparatus may hear the incoming call ring tone.

The virtual synchronous connection oriented link is different from a wireless link established between the Bluetooth device and the audio processing apparatus. The virtual synchronous connection oriented link is a link temporarily established in response to determining that the Bluetooth device and the audio processing apparatus receive the incoming call message. The wireless link is a link established after the user clicks on a device identifier of a target audio processing apparatus on the terminal. After the user executes the rejection operation or the hang-up operation on the audio processing apparatus, the wireless link between the Bluetooth device and the headset remains connected, but the virtual synchronous connection oriented link is disconnected. In response to determining that the first application receives the incoming call request next time, the Bluetooth device and the audio processing apparatus re-establish the virtual synchronous connection oriented link. Then, it may be understood that every time the first application receives the incoming call request from the second application, the Bluetooth device and the audio processing apparatus may be instructed to establish the virtual synchronous connection oriented link.

The link between the Bluetooth device and the first application remains connected and cannot be disconnected after the user hangs up the audio processing apparatus, such that the audio processing apparatus may receive the incoming call message from the first application through the Bluetooth device in real time.

After the audio processing apparatus switches from the idle state to the incoming call state, the audio processing apparatus may respond to the answer and rejection buttons.

In response to determining that the audio processing apparatus is a Bluetooth headset, that is, a wireless headset, the audio processing apparatus may receive the incoming call message transmitted from the first application through the Bluetooth device. In response to determining that the audio processing apparatus is a wired headset, the audio processing apparatus may directly receive the incoming call message transmitted from the first application without establishing the virtual synchronous connection oriented link with the Bluetooth device.

The first application is connected with the second application and the audio processing apparatus is instructed to switch to an active state by responding to the first answer message through the first application, wherein the audio processing apparatus is capable of responding to the hang-up operation of the user in the active state.

In response to determining that the audio processing apparatus is a Bluetooth headset, after the user triggers the answer button on the audio processing apparatus, the audio processing apparatus may transmit the first answer message to the Bluetooth device, and the Bluetooth device may transmit the first answer message to the first application through broadcasting (a process of transmitting the first answer message by the audio processing apparatus is a process of instructing the Bluetooth device and the first application to answer a call in the second step in FIG.2). In response to determining that the audio processing apparatus is the wired headset, the audio processing apparatus may directly transmit the first answer message to the first application.

After receiving the first answer message, the first application determines that the user agrees to make a call with the user who uses the second application. In this case, the first application may execute the answer operation, that is, the first application may be in communication with the second application. The Bluetooth device is notified that the first application is already connected with the second application, and the Bluetooth device switches from the incoming call state to the active state. The Bluetooth device further notifies the audio processing apparatus that the first application is already connected with the second application, and the audio processing apparatus switches from the incoming call state to the active state. In response to determining that both the Bluetooth device and the audio processing apparatus are both in the active state, the Bluetooth device and the audio processing apparatus may be configured to transmit audio data (a process in which the first application notifies the Bluetooth device and the audio processing apparatus that the first application is already connected with the second application is a process of notifying the Bluetooth device and the audio processing apparatus that the first application already answers a call in the third step in FIG.2).

In this case, audio output from the second application may be transmitted to the audio processing apparatus through the first application and the Bluetooth device. Audio collected by the audio processing apparatus may also be transmitted to the second application through the Bluetooth device and the first application. In this way, the users of both sides may achieve voice communication by using the first application and the second application.

The audio processing apparatus may call a Bluetooth interface (e.g. an interface provided by Bluetooth headset) and transmit the first answer message to the Bluetooth device. After receiving the first answer message, the first application calls the Bluetooth interface (e.g. an interface provided by Bluetooth headset) and notifies the Bluetooth device that the first application is already connected with the second application, that is, notifies the Bluetooth device that the first application already accepts the incoming call request from the second application.

After the audio processing apparatus switches from the incoming call state to the active state, the audio processing apparatus may respond to the hang-up button, such that the user may hang up at any time.

The first application is disconnected from the second application by responding to the first hang-up message through the first application.

The first application responds to the first hang-up message, the first application is disconnected from the second application, and the Bluetooth device may notify the first application of the first hang-up message and also disconnect the virtual synchronous connection oriented link with the audio processing apparatus, such that both the Bluetooth device and the audio processing apparatus switch from the active state to a disconnected state, and then switch to the idle state.

For example, after the user triggers the hang-up button of the audio processing apparatus, if the audio processing apparatus is the Bluetooth headset, the audio processing apparatus may transmit the first hang-up message to the Bluetooth device and instruct the Bluetooth device to hang up, and the Bluetooth device may disconnect the virtual synchronous connection oriented link with the audio processing apparatus. After the virtual synchronous connection oriented link is disconnected, both the Bluetooth device and the audio processing apparatus may switch from the active state to the disconnected state and then to the idle state. The Bluetooth device may transmit the first hang-up message to the first application and instruct the first application to hang up. The first application executes the hang-up operation in response to the first hang-up message, and the first application is disconnected from the second application, such that the call is terminated (a process of transmitting the first hang-up message by the audio processing apparatus is a process of instructing the Bluetooth device to hang up by the audio processing apparatus in the fourth step in FIG.2, and a process of executing the hang-up operation by the first application is a process as shown in the fifth step in FIG.2).

If the audio processing apparatus is the wired headset, the audio processing apparatus may directly transmit the first hang-up message to the first application, and meanwhile, the audio processing apparatus may automatically switch to the idle state, and further the first application is disconnected from the second application after receiving the first hang-up message.

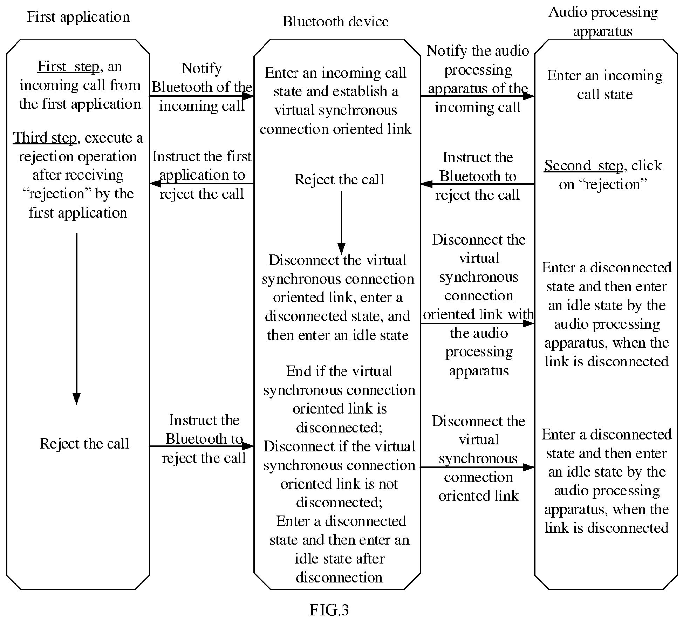

Scenario 2: with reference to FIG.3, the scenario in which the user rejects a call through the audio processing apparatus includes the following flow:
the incoming call message is transmitted to the Bluetooth device through the first application, wherein the Bluetooth device is configured to synchronize the incoming call message to the audio processing apparatus; and the Bluetooth device and the audio processing apparatus establish a virtual synchronous connection oriented link in response to determining that the incoming call message is received (as shown in the first step in FIG.3).

On this basis, the users may click on "rejection" as shown in the second step in FIG.3.

A connection with the second application is rejected by responding to the first rejection message through the first application (as shown in the third step in FIG.3).

In response to the first rejection message, the first application executes the rejection operation to reject a connection with the second application. In addition, the Bluetooth device may automatically disconnect the virtual synchronous connection oriented link with the audio processing apparatus while notifying the first application of the first rejection message. In response to determining that the virtual synchronous connection oriented link is disconnected, both the Bluetooth device and the audio processing apparatus switch from the active state to the disconnected state, and then to the idle state.

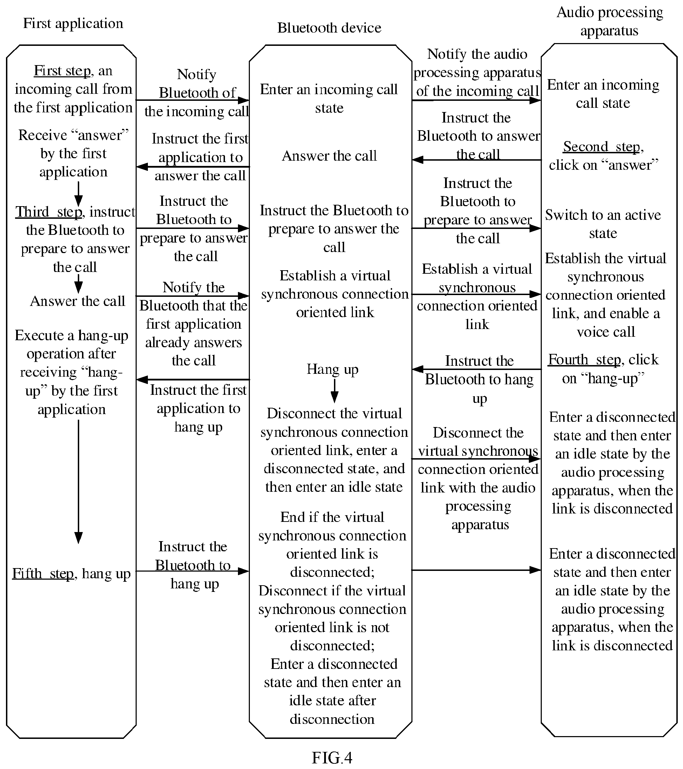

It is to be noted that when studying data interaction between the audio processing apparatus and the first application, the applicant also provides an interaction method shown in FIG.4, with reference to an answer and hang-up flow of the audio processing apparatus shown in FIG.4.

First step, the first application first notifies the Bluetooth device of an incoming call from the second application, the Bluetooth device switches to the incoming call state, then the Bluetooth device notifies the audio processing apparatus of the incoming call from the second application, and the audio processing apparatus switches to the incoming call state.

Second step, the user triggers the answer button (clicks on "answer") on the audio processing apparatus, the audio processing apparatus notifies the Bluetooth device that the audio processing apparatus already answers a call, and then the Bluetooth device notifies the first application that the audio processing apparatus already answers the call.

Third step, after receiving the answer request, the first application instructs the Bluetooth device to prepare to answer the call, the Bluetooth device switches from the incoming call state to the active state, the Bluetooth device further instructs the audio processing apparatus to prepare to answer the call, and the audio processing apparatus switch from the incoming call state to the active state; and after the first application answers the incoming call from the second application, the Bluetooth device and the audio processing apparatus are notified that the first application already answers the call. In this case, the Bluetooth device and the headset establish the virtual synchronous connection oriented link, and transmit the audio data based on the virtual synchronous connection oriented link.

Fourth step, the user triggers the hang-up button (clicks on "hang-up") on the audio processing apparatus, the audio processing apparatus instructs the Bluetooth device to hang up, and the Bluetooth device instructs the first application to be disconnected from the second application.

Fifth step, the first application executes the hang-up operation.

It may be seen that in the solution shown in FIG.4, a process of switching the incoming call state and establishing the virtual synchronous connection oriented link is divided into two steps, that is, first step and third step. An evolved solution provided in the disclosure is to switch the incoming call state and establish the virtual synchronous connection oriented link directly in the same step. Compared with the solution, the disclosure omits a flow in which the first application instructs the Bluetooth device and the audio processing apparatus to prepare to answer a call. Thus, an interaction flow between the first application and the audio processing apparatus may be further reduced, such that the audio processing apparatus may respond to the audio data output from the first application more quickly.

According to the technical solution, in a first aspect, after the answer button is triggered on the audio processing apparatus, the first answer message may be transmitted to the first application, the terminal responds to the first answer message through the first application, the first application is connected with the second application, and the audio processing apparatus and the Bluetooth device are controlled to be in the active state. In this way, the audio data transmitted from the second application may be transmitted to the audio processing apparatus through the first application and the Bluetooth device, and the audio data transmitted from the audio processing apparatus may also be transmitted to the second application through the Bluetooth device and the first application. Through the process, the user may trigger the first application to answer a call by triggering the answer button of the audio processing apparatus, and after the user triggers the answer button, the first application may be in communication with the second application in response to the answer button triggered by the user.

In a second aspect, after the hang-up button is triggered on the audio processing apparatus, the first hang-up message may be transmitted to the first application, and the terminal may disconnect the first application from the second application by responding to the first hang-up message through the first application. Through the process, the user may trigger the first application to hang up by triggering the hang-up button of the audio processing apparatus, that is, the first application may disconnect communication with the second application in response to the hang-up button triggered by the user on the audio processing apparatus.

In a third aspect, after the rejection button is triggered on the audio processing apparatus, the first rejection message may be transmitted to the first application, and the terminal may reject a connection between the first application and the second application by responding to the first rejection message through the first application. Through the process, the first application may reject the incoming call request from the second application in response to the rejection button of the user, and the user may trigger the rejection button of the audio processing apparatus and also trigger the first application to reject a call.

In a fourth aspect, in the disclosure, in response to determining that the first application notifies the Bluetooth device and the audio processing apparatus of an incoming call, the Bluetooth device and the audio processing apparatus may establish the virtual synchronous connection oriented link immediately after entering the incoming call state. In this way, the first application may be prevented from creating an extra flow to instruct the Bluetooth device and the audio processing apparatus to establish the virtual synchronous connection oriented link, such that the interaction flow between the first application and the audio processing apparatus is reduced, and a response speed of the audio processing apparatus is improved.

In a possible embodiment, the user may not only execute the answer operation, the hang-up operation and the rejection operation on the first application on the audio processing apparatus; and the user may also execute the answer operation, the hang-up operation and the rejection operation on the first application, as detailed in the following steps.

The first application responds to a second response message, and an operation corresponding to the second response message is executed on the second application, wherein the second response message is a response message generated after the user executes a touch operation on the first application, and the second response message includes any one of a second answer message, a second hang-up message, or a second rejection message.

The first application is connected with the second application and the audio processing apparatus is instructed to switch to an active state by responding to the second answer message through the first application, wherein the audio processing apparatus is capable of responding to the hang-up operation of the user in the active state.

For example, the second answer message is a message generated after the user triggers the answer button on an interface displayed by the first application, and the first application is connected with the second application in response to the second answer message; and meanwhile, the first application notifies the Bluetooth device and the audio processing apparatus that the first application already answers a call, and further the Bluetooth device and the audio processing apparatus switch from the incoming call state to the active state.

The first application is disconnected from the second application by responding to the second hang-up message through the first application.

For example, the second hang-up message is a message generated after the user triggers the hang-up button on the interface displayed by the first application, and the first application is disconnected from the second application in response to the second hang-up message.

A connection with the second application is rejected by responding to the second rejection message through the first application.

For example, the second rejection message is a message generated after the user triggers the rejection button on the interface displayed by the first application, and the connection with the second application is rejected by responding to the second rejection message through the first application.

After the first application receives the incoming call request transmitted from the second application, the user may trigger the answer button on the audio processing apparatus, or directly trigger the answer button on the first application so as to accept the incoming call request from the second application; the user may also trigger the hang-up button on the audio processing apparatus, or directly trigger the hang-up button on the first application so as to hang up; and the user may trigger the rejection button on the audio processing apparatus, or directly trigger the rejection button on the first application. The use scenarios depend on actual needs of the user, which are not limited here.

Through the technical solution, the user may not only execute the hang-up, answer and rejection operations of the first application on the audio processing apparatus, or may directly execute the hang-up, answer and rejection operations on the first application, which brings convenience to the user for three-way telephone communication.

In a possible embodiment, with reference to FIGS. 2 and 3, a virtual synchronous connection oriented link between the Bluetooth device and the audio processing apparatus may be disconnected in two ways as follows:
Way 1: the Bluetooth device is instructed to disconnect the virtual synchronous connection oriented link with the audio processing apparatus through the first application, and the audio processing apparatus switches to an idle state in response to determining that the virtual synchronous connection oriented link between the audio processing apparatus and the Bluetooth device is disconnected.

In this way, after the user triggers a hang-up button or a rejection button through the audio processing apparatus, the first application receives a first hang-up message or a first rejection message, and instructs the Bluetooth device to disconnect the virtual synchronous connection oriented link in response to the first hang-up message or the first rejection message.

It may be understood that in response to determining that the user triggers the hang-up button or the rejection button through the audio processing apparatus, the audio processing apparatus may instruct the Bluetooth device to hang up, and the Bluetooth device may automatically disconnect the virtual synchronous connection oriented link with the audio processing apparatus. When the Bluetooth device receives a hang-up instruction transmitted from the first application again, if the Bluetooth device already disconnects the virtual synchronous connection oriented link, the hang-up instruction is not processed; and if the Bluetooth device does not disconnect the virtual synchronous connection oriented link, the hang-up instruction is executed so as to disconnect the virtual synchronous connection oriented link.

In this way, after the user triggers the hang-up button or the rejection button on the first application, the first application receives a second hang-up message or a second rejection message, and instructs the Bluetooth device to disconnect the virtual synchronous connection oriented link in response to the second hang-up message or the second rejection message.

It may be understood that in response to determining that the user triggers the hang-up button or the rejection button through the first application, the Bluetooth device cannot receive a hang-up notification transmitted from the audio processing apparatus because the hang-up or rejection button is not triggered on the audio processing apparatus. In this case, the first application may instruct the Bluetooth device to hang up, and the Bluetooth device may disconnect the virtual synchronous connection oriented link.

In way 1, the Bluetooth device may be instructed to disconnect the virtual synchronous connection oriented link after the first application receives the first hang-up message of the Bluetooth device, regardless of whether the user triggers the hang-up button or the rejection button on the audio processing apparatus or trigger the hang-up button or the rejection button on the first application.

Way 2: in response to determining that the user triggers the hang-up button or the rejection button on the first application, the Bluetooth device is instructed to disconnect the virtual synchronous connection oriented link with the audio processing apparatus through the first application, and the audio processing apparatus switches to the idle state in response to determining that the virtual synchronous connection oriented link between the audio processing apparatus and the Bluetooth device is disconnected.

In this way, if the first application determines that the user triggers the hang-up button or the rejection button on the first application, the first application may instruct the Bluetooth device to disconnect the virtual synchronous connection oriented link because the Bluetooth device cannot receive the hang-up notification transmitted from the audio processing apparatus; and if the first application determines that the user triggers the hang-up button or the rejection button on the audio processing apparatus, the first application does not need to instruct the Bluetooth device to disconnect the virtual synchronous connection oriented link because the audio processing apparatus may instruct the Bluetooth device to hang up.

In way 2, whether to instruct the Bluetooth device to disconnect the virtual synchronous connection oriented link may be determined by the first application according to situations.

Through the technical solution, when way 1 is used to instruct the Bluetooth device to disconnect the virtual synchronous connection oriented link, a logic of instructing the Bluetooth device to disconnect the virtual synchronous connection oriented link is simple, such that development cost is reduced. When way 2 is used to instruct the Bluetooth device to disconnect the virtual synchronous connection oriented link, the hang-up instruction for disconnecting the link may be transmitted only when the user triggers the hang-up button or the rejection button of the first application, such that the number of times of transmitting the hang-up instruction through the first application is reduced, and further the number of times of interaction between the terminal and the Bluetooth device is reduced.

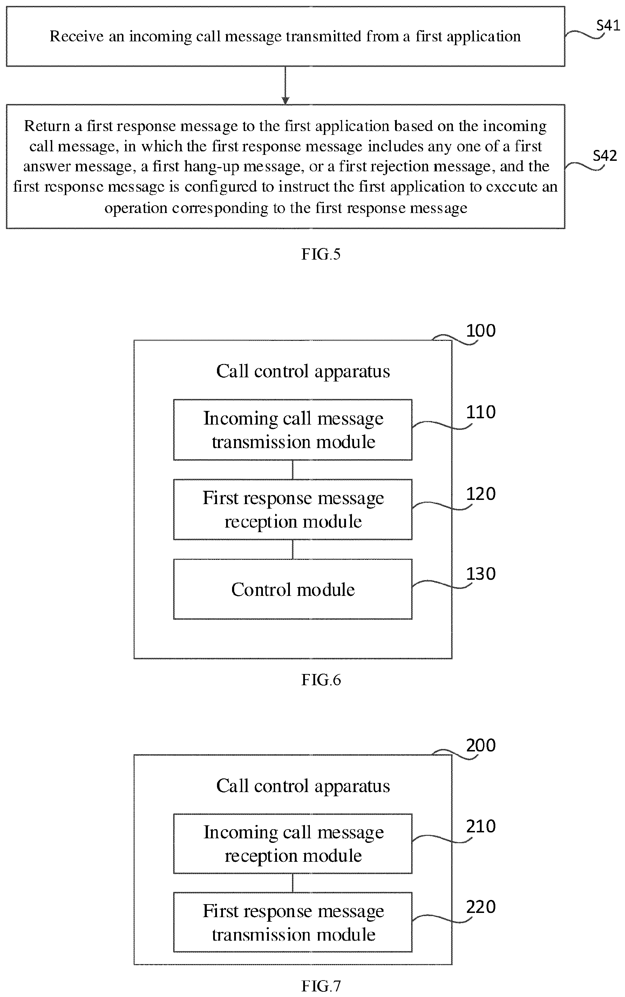

Based on the same inventive concept, with reference to FIG.5, the disclosure further provides a voice call control method. The method is performed by an audio processing apparatus and includes the following steps:
in step S41, an incoming call message transmitted from a first application is received.

The step is similar to step S11 and will not be described in detail here.

In step S42, a first response message is returned to the first application based on the incoming call message, wherein the first response message includes any one of a first answer message, a first hang-up message, or a first rejection message, and the first response message is configured to instruct the first application to execute an operation corresponding to the first response message.

The step is similar to step S12 and will not be described in detail here.

Through the technical solution, after the audio processing apparatus receives the incoming call message transmitted from the first application, the user may trigger an answer button and a rejection button on the audio processing apparatus, and may further trigger a hang-up button after triggering the answer button. In this way, different first response messages are generated and fed back to the first application, and further the first application is instructed to execute operations corresponding to the different first response messages, such that different call states are achieved.

In a possible embodiment, the audio processing apparatus and the first application may remotely hang up, answer and reject a call received by the first application through the following steps.

In response to the incoming call message transmitted from the first application through Bluetooth device, an incoming call state is entered; and a virtual synchronous connection oriented link is established between the Bluetooth device and the audio processing apparatus in response to determining that the Bluetooth device and the audio processing apparatus are in an incoming call state.

In response to an answer instruction transmitted from the first application, an active state is switched to, wherein the audio processing apparatus is capable of responding to a hang-up operation of a user in the active state.

In response to disconnection of the virtual synchronous connection oriented link between Bluetooth device and the audio processing apparatus, an idle state is switched to.

The disconnection of the virtual synchronous connection oriented link between the Bluetooth device and the audio processing apparatus may occur when the user triggers a hang-up or rejection button on the first application, or triggers a hang-up or rejection button on the audio processing apparatus.

When the virtual synchronous connection oriented link between the Bluetooth device and the audio processing apparatus is disconnected, the Bluetooth device automatically switches from the active state to the idle state.

It may be understood that when the audio processing apparatus is in the incoming call state, the user may change a call state of the first application by triggering an answer button or the rejection button on the audio processing apparatus; and when the audio processing apparatus is in the active state, the user may change a call state of the first application by triggering the hang-up button on the audio processing apparatus.

FIG.6 is a block diagram of a call control apparatus according to an example. The call control apparatus 100 is performed by a terminal. With reference to FIG.6, the call control apparatus 100 includes: an incoming call message transmission module 110, a first response message reception module 120, and a control module 130.

The incoming call message transmission module 110 is configured to transmit an incoming call message to an audio processing apparatus through a first application.

The first response message reception module 120 is configured to receive a first response message returned from the audio processing apparatus based on the incoming call message through the first application, wherein the first response message includes any one of an answer message, a hang-up message, or a rejection message.

The control module 130 is configured to respond to the first response message through the first application, and execute an operation corresponding to the first response message on a second application.

Optionally, the incoming call message transmission module 110 includes:
an incoming call message transmission sub-module configured to transmit the incoming call message to Bluetooth device through the first application, wherein the Bluetooth device is configured to synchronize the incoming call message to the audio processing apparatus; and the Bluetooth device and the audio processing apparatus establish a virtual synchronous connection oriented link in response to determining that the incoming call message is received.

Optionally, the control module 130 includes:
a first control sub-module configured to connect the first application with the second application and instructing the audio processing apparatus to switch to an active state by responding to the first answer message through the first application, wherein the audio processing apparatus is capable of responding to a hang-up operation of a user in the active state.

Optionally, the control module 130 includes:
a second control sub-module configured to disconnect the first application from the second application by responding to the first hang-up message through the first application.

Optionally, the control module 130 includes:
a third control sub-module configured to reject a connection with the second application by responding to the first rejection message through the first application.

Optionally, the call control apparatus 100 includes:
an execution module configured to respond to a second response message through the first application, and execute an operation corresponding to the second response message on the second application, wherein the second response message is a response message generated after a user executes a touch operation on the first application, and the second response message includes any one of a second answer message, a second hang-up message, or a second rejection message.

Optionally, the execution module includes:
a first execution sub-module configured to connect the first application with the second application and instruct the audio processing apparatus to switch to the active state by responding to the second answer message through the first application, wherein the audio processing apparatus is capable of responding to the hang-up operation of the user in the active state.

Optionally, the execution module includes:
a second execution sub-module configured to disconnect the first application from the second application by responding to the second hang-up message through the first application.

Optionally, the execution module includes:
a third execution sub-module configured to reject a connection with the second application by responding to the second rejection message through the first application.

Optionally, the call control apparatus 100 includes:
a disconnection notification module configured to instruct the Bluetooth device to disconnect the virtual synchronous connection oriented link with the audio processing apparatus through the first application, wherein the audio processing apparatus switches to an idle state in response to determining that the virtual synchronous connection oriented link between the audio processing apparatus and the Bluetooth device is disconnected.

FIG.7 is a block diagram of a call control apparatus according to an example. The call control apparatus 200 is performed by an audio processing apparatus. With reference to FIG.7, the call control apparatus 200 includes: an incoming call message reception module 210 and a first response message transmission module 220.

The incoming call message reception module is configured to receive an incoming call message transmitted from a first application.

The first response message transmission module is configured to return a first response message to the first application based on the incoming call message, wherein the first response message includes any one of a first answer message, a first hang-up message, or a first rejection message, and the first response message is configured to instruct the first application to execute an operation corresponding to the first response message.

Optionally, the incoming call message reception module includes:
an incoming call state entering sub-module configured to enter an incoming call state in response to the incoming call message transmitted from the first application through Bluetooth device; and
a virtual synchronous connection oriented link establishment sub-module configured to establish a virtual synchronous connection oriented link between the Bluetooth device and the audio processing apparatus in response to determining that the Bluetooth device and the audio processing apparatus are in the incoming call state.

Optionally, the call control apparatus 200 includes:
a first switching module configured to switch to an active state in response to an answer instruction transmitted from the first application, wherein the audio processing apparatus is capable of responding to a hang-up operation of a user in the active state.

Optionally, the call control apparatus 200 includes:
a second switching module configured to switch to an idle state in response to disconnection of the virtual synchronous connection oriented link between the Bluetooth device and the audio processing apparatus.

For the apparatus in the examples described above, its specific implementation for each module to execute an operation is described in detail in the examples relating to the call control method, and will not be described in detail here.

The disclosure further provides a computer-readable storage medium, which stores a computer program instruction, and the program instruction implements the steps of the call control method according to the disclosure when executed by a processor.

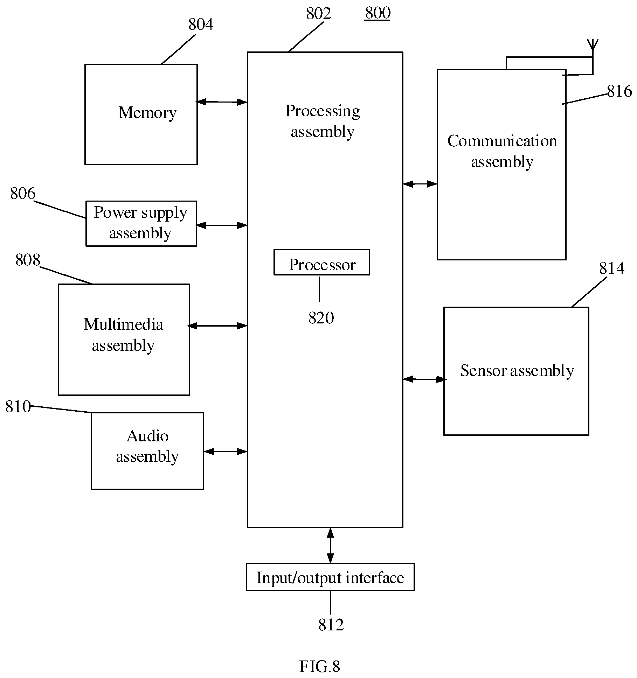

FIG.8 is a block diagram of a call control apparatus 800 according to an example. For example, the apparatus 800 may be a terminal, such as mobile phone, a computer, a digital broadcast terminal, a messaging device, a game console, a tablet device, a medical device, a fitness device, a personal digital assistant, etc.

With reference to FIG.8, the apparatus 800 may include one or more of the following assemblies: a processing assembly 802, a memory 804, a power supply assembly 806, a multimedia assembly 808, an audio assembly 810, an input/output interface 812, a sensor assembly 814, and a communication assembly 816.

The processing assembly 802 generally controls all operations of the apparatus 800, such as operations associated with display, telephone call, data communication, camera operation and recording operation. The processing assembly 802 may include one or more processors 820 for executing an instruction, so as to complete all or some steps of the method. In addition, the processing assembly 802 may include one or more modules to facilitate interaction between the processing assembly 802 and other assemblies. For example, the processing assembly 802 may include a multimedia module to facilitate interaction between the multimedia assembly 808 and the processing assembly 802.

The memory 804 is configured to store various types of data, so as to support the operations on the apparatus 800. Examples of the data include an instruction for any first application program or method operating on the apparatus 800, contact data, phone book data, a message, a picture, a video, etc. The memory 804 may be implemented by any type of volatile or nonvolatile memory device or their combination, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk, or an optical disk.

The power supply assembly 806 supplies power to various assemblies of the apparatus 800. The power supply assembly 806 may include a power management system, one or more power supplies, and other assemblies associated with generating, managing and distributing power for the apparatus 800.

The multimedia assembly 808 includes a screen that provides an output interface between the apparatus 800 and a user. In some examples, the screen may include a liquid crystal display (LCD) and a touch panel (TP). If the screen includes the touch panel, the screen may be implemented as a touch screen to receive an input signal from the user. The touch panel includes one or more touch sensors to sense touch, slide and gestures on the touch panel. The touch sensor may sense a boundary of a touch or slide operation, and detect duration and pressure related to the touch or slide operation. In some examples, the multimedia assembly 808 includes a front-facing camera and/or a rear-facing camera. When the apparatus 800 is in an operation mode, such as a shooting mode or a video mode, the front-facing camera and/or the rear-facing camera may receive external multimedia data. Each of the front-facing camera and the rear-facing camera may be a fixed optical lens system or have a focal length and optical zoom capability.

The audio assembly 810 is configured to output and/or input an audio signal. For example, the audio assembly 810 includes a microphone (MIC). The microphone is configured to receive an external audio signal when the apparatus 800 is in operation modes such as a call mode, a recording mode and a speech identification mode. The received audio signal may be further stored in the memory 804 or transmitted via the communication assembly 816. In some examples, the audio assembly 810 further includes a speaker for outputting an audio signal.

The input/output interface 812 provides an interface between the processing assembly 802 and a peripheral interface module. The peripheral interface module may be a keyboard, a click wheel, a button, etc. The buttons may include, but are not limited to, a home button, a volume button, a start button, and a lock button.

The sensor assembly 814 includes one or more sensors for providing various aspects of state assessment for the apparatus 800. For example, the sensor assembly 814 may detect an on/off state of the apparatus 800 and relative positioning of the assemblies such as a display and a keypad of the apparatus 800, and the sensor assembly 814 may further detect position change of the apparatus 800 or an assembly of the apparatus 800, presence or absence of contact between the user and the apparatus 800, an orientation or acceleration/deceleration of the apparatus 800 and temperature change of the apparatus 800. The sensor assembly 814 may include a proximity sensor configured to detect presence of a nearby object without any physical contact. The sensor assembly 814 may further include an optical sensor, such as a complementary metal-oxide-semiconductor (CMOS) or charge-coupled device (CCD) image sensor, which is used in imaging application. In some examples, the sensor assembly 814 may further include an acceleration sensor, a gyroscope sensor, a magnetic sensor, a pressure sensor, or a temperature sensor.

The communication assembly 816 is configured to facilitate wired or wireless communication between the apparatus 800 and other devices. The apparatus 800 may access a wireless network based on a communication standard, such as WiFi, the 2nd generation mobile communication technology (2G) or the 3rd generation mobile communication technology (3G), or their combination. In an example, the communication assembly 816 receives a broadcast signal or broadcast related information from an external broadcast management system via a broadcast channel. In an example, the communication assembly 816 further includes a near field communication (NFC) module to facilitate short-range communication. For example, the NFC module may be implemented based on a radio frequency identification (RFID) technology, an infrared data association (IrDA) technology, an ultra wide band (UWB) technology, a Bluetooth (BT) technology or other technologies.

In an example, the apparatus 800 may be implemented by one or more of an application specific integrated circuit (ASIC), a digital signal processor (DSP), a digital signal processing device (DSPD), a programmable logic device (PLD), a field programmable gate array (FPGA), a controller, a microcontroller, a microprocessor or other electronic components, thus executing the method.

In an example, there is further provided a non-transitory computer-readable storage medium including an instruction, such as the memory 804 including an instruction. The instruction may be executed by the processor 820 of the apparatus 800 so as to complete the method. For example, the non-transitory computer-readable storage medium may be ROM, a random access memory (RAM), CD-ROM, a magnetic tape, a floppy disk, an optical data storage device, etc.

The apparatus may be an independent electronic device or part of an independent electronic device. For example, in an example, the apparatus may be an integrated circuit (IC) or a chip, wherein the integrated circuit may be an IC or a collection of a plurality of ICs. The chip may include, but is not limited to, the following types: a graphics processing unit (GPU), a central processing unit (CPU), FPGA, DSP, ASIC, a system on chip (SoC), etc. The integrated circuit or chip may be configured to execute an executable instruction (or a code), so as to implement the call control method. The executable instruction may be stored in the integrated circuit or chip, or may be obtained from other apparatuses or devices. For example, the integrated circuit or chip includes a processor, a memory, and an interface for communication with other apparatuses. The executable instruction may be stored in the memory. The executable instruction implements the call control method when executed by the processor; and optionally, the integrated circuit or chip may receive the executable instruction through the interface and transmit the instruction to the processor for execution, so as to implement the call control method.

In another example, there is further provided a computer program product, which includes a computer program executable by a programmable apparatus, and the computer program has a code part for executing the call control method when executed by the programmable apparatus.

The disclosure further provides an audio processing apparatus, which includes a processor, and a memory configured to store a processor executable instruction, wherein the processor is configured to execute the executable instruction to implement the call control method.

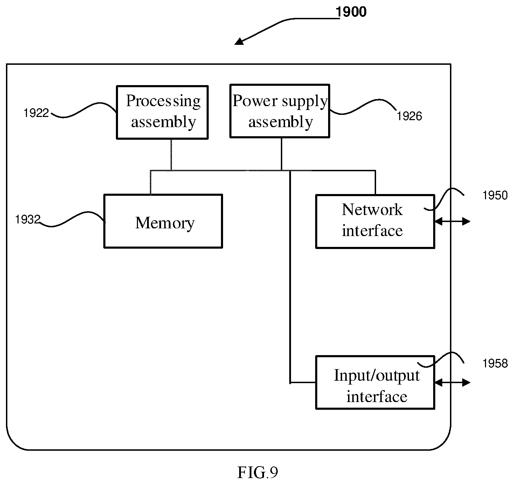

FIG.9 is a block diagram of a call control apparatus 1900 according to an example. For example, a server may be used as the apparatus 1900. With reference to FIG.9, the apparatus 1900 includes a processing assembly 1922, which further includes one or more processors, and a memory resource represented by a memory 1932, which is configured to store instructions executable by the processing assembly 1922, such as a first application. The first application stored in the memory 1932 may include one or more modules that each corresponds to a group of instructions. In addition, the processing assembly 1922 is configured to execute the instructions, so as to execute the call control method.

The apparatus 1900 may further include a power supply assembly 1926 configured to execute power management of the apparatus 1900, a wired or wireless network interface 1950 configured to connect the apparatus 1900 to a network, and an input/output interface 1958. The apparatus 1900 may operate an operating system stored in the memory 1932.

## Claims

1. A call control method, performed by a terminal and comprising:
transmitting (S11) an incoming call message to an audio processing apparatus through a first application;
receiving (S12) a first response message returned from the audio processing apparatus based on the incoming call message through the first application, wherein the first response message comprises any one of a first answer message, a first hang-up message, or a first rejection message; and
responding (S13) to the first response message through the first application, and executing an operation corresponding to the first response message on a second application;
wherein transmitting (S11) the incoming call message to the audio processing apparatus through the first application comprises:
transmitting the incoming call message to a Bluetooth device through the first application, wherein the Bluetooth device is configured to synchronize the incoming call message to the audio processing apparatus; and the Bluetooth device and the audio processing apparatus establish a virtual synchronous connection oriented link in response to determining that the incoming call message is received;
**characterized in that**
the virtual synchronous connection oriented link is different from a wireless link established between the Bluetooth device and the audio processing apparatus, and the virtual synchronous connection oriented link is disconnected after the audio processing apparatus executes a rejection operation or a hang-up operation, while the wireless link between the Bluetooth device and the audio processing apparatus remains connected.

2. The call control method according to claim 1, wherein responding (S13) to the first response message through the first application, and executing the operation corresponding to the first response message on the second application comprises:
connecting the first application with the second application and instructing the audio processing apparatus to switch to an active state by responding to the first answer message through the first application, wherein the audio processing apparatus is capable of responding to a hang-up operation of a user in the active state;
optionally,
disconnecting the first application from the second application by responding to the first hang-up message through the first application;
optionally,
rejecting a connection with the second application by responding to the first rejection message through the first application.

3. The call control method according to any one of the preceding claims, further comprising:
responding to a second response message through the first application, and executing an operation corresponding to the second response message on the second application, wherein the second response message is a response message generated after a user executes a touch operation on the first application, and the second response message comprises any one of a second answer message, a second hang-up message, or a second rejection message.

4. The call control method according to claim 3, wherein responding to the second response message through the first application, and executing the operation corresponding to the second response message on the second application comprises:
connecting the first application with the second application and instructing the audio processing apparatus to switch to an active state by responding to the second answer message through the first application, wherein the audio processing apparatus is capable of responding to a hang-up operation of the user in the active state;
optionally,
disconnecting the first application from the second application by responding to the second hang-up message through the first application;
optionally,
rejecting a connection with the second application by responding to the second rejection message through the first application.

5. The call control method according to anyone of the preceding claims, further comprising:
instructing a Bluetooth device to disconnect a virtual synchronous connection oriented link with the audio processing apparatus through the first application, wherein the audio processing apparatus switches to an idle state in response to determining that the virtual synchronous connection oriented link between the audio processing apparatus and the Bluetooth device is disconnected.

6. A call control method, performed by an audio processing apparatus and comprising:
receiving (S41) an incoming call message transmitted from a first application; and
returning (S42) a first response message to the first application based on the incoming call message, wherein the first response message comprises any one of a first answer message, a first hang-up message, or a first rejection message, and the first response message is configured to instruct the first application to execute an operation corresponding to the first response message;
wherein receiving (S41) the incoming call message transmitted from the first application comprises:
in response to the incoming call message transmitted from the first application through a Bluetooth device, entering an incoming call state; and
establishing a virtual synchronous connection oriented link between the Bluetooth device and the audio processing apparatus in response to determining that the Bluetooth device and the audio processing apparatus are in the incoming call state;
**characterized in that**
the virtual synchronous connection oriented link is different from a wireless link established between the Bluetooth device and the audio processing apparatus, and the virtual synchronous connection oriented link is disconnected after the audio processing apparatus executes a rejection operation or a hang-up operation, while the wireless link between the Bluetooth device and the audio processing apparatus remains connected.

7. The call control method according to claim 6, further comprising:
in response to an answer instruction transmitted from the first application, switching to an active state, wherein the audio processing apparatus is capable of responding to a hang-up operation of a user in the active state.

8. The call control method according to 6 or 7, further comprising:
in response to disconnection of a virtual synchronous connection oriented link between the Bluetooth device and the audio processing apparatus, switching to an idle state.

9. A call control apparatus (100), performed by a terminal and comprising:
an incoming call message transmission module (110) configured to transmit an incoming call message to an audio processing apparatus through a first application;
a first response message reception module (120) configured to receive a first response message returned from the audio processing apparatus based on the incoming call message through the first application, wherein the first response message comprises any one of an answer message, a hang-up message, or a rejection message; and
a control module (130) configured to respond to the first response message through the first application, and execute an operation corresponding to the first response message on a second application;
wherein the incoming call message transmission module (110) comprises:
an incoming call message transmission sub-module configured to transmit the incoming call message to a Bluetooth device through the first application, wherein the Bluetooth device is configured to synchronize the incoming call message to the audio processing apparatus; and the Bluetooth device and the audio processing apparatus establish a virtual synchronous connection oriented link in response to determining that the incoming call message is received;
**characterized in that**
the virtual synchronous connection oriented link is different from a wireless link established between the Bluetooth device and the audio processing apparatus, and the virtual synchronous connection oriented link is disconnected after the audio processing apparatus executes a rejection operation or a hang-up operation, while the wireless link between the Bluetooth device and the audio processing apparatus remains connected.

10. A call control apparatus (200), performed by an audio processing apparatus and comprising:
an incoming call message reception module (210) configured to receive an incoming call message transmitted from a first application; and
a first response message transmission module (220) configured to return a first response message to the first application based on the incoming call message, wherein the first response message comprises any one of a first answer message, a first hang-up message, or a first rejection message, and the first response message is configured to instruct the first application to execute an operation corresponding to the first response message;
wherein the incoming call message reception module (210) comprises:
an incoming call state entering sub-module configured to enter an incoming call state in response to the incoming call message transmitted from the first application through a Bluetooth device; and
a virtual synchronous connection oriented link establishment sub-module configured to establish a virtual synchronous connection oriented link between the Bluetooth device and the audio processing apparatus in response to determining that the Bluetooth device and the audio processing apparatus are in the incoming call state;
**characterized in that**
the virtual synchronous connection oriented link is different from a wireless link established between the Bluetooth device and the audio processing apparatus, and the virtual synchronous connection oriented link is disconnected after the audio processing apparatus executes a rejection operation or a hang-up operation, while the wireless link between the Bluetooth device and the audio processing apparatus remains connected.

11. A non-transitory computer-readable storage medium, storing a computer program instruction, wherein a processor is configured to execute the computer program instruction to implement the call control method according to any one of claims 1 to 5 or any one of claims 6 to 8.

12. A chip, comprising a processor and an interface, wherein the processor is configured to execute the call control method according to any one of claims 1 to 5 or any one of claims 6 to 8 by reading an instruction.

## Patentansprüche

1. Anrufsteuerungsverfahren, das von einem Endgerät durchgeführt wird und umfasst:
Senden (S11) einer Nachricht über einen eingehenden Anruf an eine Audioverarbeitungsvorrichtung durch eine erste Anwendung;
Empfangen (S12) einer ersten Reaktionsnachricht, die von der Audioverarbeitungsvorrichtung auf der Grundlage der Nachricht über einen eingehenden Anruf durch die erste Anwendung zurückgesendet wird, wobei die erste Reaktionsnachricht eine erste Antwortnachricht, eine erste Auflegenachricht oder eine erste Ablehnungsnachricht umfasst; und
Reagieren (S13) auf die erste Reaktionsnachricht durch die erste Anwendung und Ausführen eines der ersten Reaktionsnachricht entsprechenden Vorgangs bei einer zweiten Anwendung;
wobei das Senden (S11) der Nachricht über einen eingehenden Anruf an die Audioverarbeitungsvorrichtung durch die erste Anwendung umfasst:
Senden der Nachricht über einen eingehenden Anruf an ein Bluetooth-Gerät durch die erste Anwendung, wobei das Bluetooth-Gerät so ausgebildet ist, dass es die Nachricht über einen eingehenden Anruf mit der Audioverarbeitungsvorrichtung synchronisiert; und wobei das Bluetooth-Gerät und die Audioverarbeitungsvorrichtung eine virtuelle synchronverbindungsorientierte Verbindung als Reaktion auf das Feststellen herstellen, dass die Nachricht über einen eingehenden Anruf empfangen wurde;
**dadurch gekennzeichnet, dass**
die virtuelle synchronverbindungsorientierte Verbindung sich von einer drahtlosen Verbindung unterscheidet, die zwischen dem Bluetooth-Gerät und der Audioverarbeitungsvorrichtung hergestellt wird, und die virtuelle synchronverbindungsorientierte Verbindung getrennt wird, nachdem die Audioverarbeitungsvorrichtung einen Ablehnungsvorgang oder einen Auflegevorgang ausführt, während die drahtlose Verbindung zwischen dem Bluetooth-Gerät und der Audioverarbeitungsvorrichtung verbunden bleibt.

2. Anrufsteuerungsverfahren nach Anspruch 1, wobei das Reagieren (S13) auf die erste Reaktionsnachricht durch die erste Anwendung und das Ausführen des der ersten Reaktionsnachricht entsprechenden Vorgangs bei der zweiten Anwendung umfasst:
Verbinden der ersten Anwendung mit der zweiten Anwendung und Anweisen der Audioverarbeitungsvorrichtung, in einen aktiven Zustand zu wechseln, indem sie auf die erste Antwortnachricht durch die erste Anwendung reagiert, wobei die Audioverarbeitungsvorrichtung in der Lage ist, auf einen Auflegevorgang eines Benutzers im aktiven Zustand zu reagieren;
optional
Trennen der ersten Anwendung von der zweiten Anwendung durch Reagieren auf die erste Auflegenachricht durch die erste Anwendung;
optional
Ablehnen einer Verbindung mit der zweiten Anwendung durch Reagieren auf die erste Ablehnungsnachricht durch die erste Anwendung.

3. Anrufsteuerungsverfahren nach einem der vorstehenden Ansprüche, das ferner umfasst:
Reagieren auf eine zweite Reaktionsnachricht durch die erste Anwendung und Ausführen eines der zweiten Reaktionsnachricht entsprechenden Vorgangs bei der zweiten Anwendung, wobei die zweite Reaktionsnachricht eine Reaktionsnachricht ist, die erzeugt wird, nachdem ein Benutzer eine Touchbedienung bei der ersten Anwendung ausgeführt hat, und die zweite Reaktionsnachricht eine zweite Antwortnachricht, eine zweite Auflegenachricht oder eine zweite Ablehnungsnachricht umfasst.

4. Anrufsteuerungsverfahren nach Anspruch 3, wobei das Reagieren auf die zweite Reaktionsnachricht durch die erste Anwendung und das Ausführen des der zweiten Reaktionsnachricht entsprechenden Vorgangs bei der zweiten Anwendung umfasst:
Verbinden der ersten Anwendung mit der zweiten Anwendung und Anweisen der Audioverarbeitungsvorrichtung, in einen aktiven Zustand zu wechseln, indem sie auf die zweite Antwortnachricht durch die erste Anwendung reagiert, wobei die Audioverarbeitungsvorrichtung in der Lage ist, auf einen Auflegevorgang des Benutzers im aktiven Zustand zu reagieren;
optional
Trennen der ersten Anwendung von der zweiten Anwendung durch Reagieren auf die zweite Auflegenachricht durch die erste Anwendung;
optional
Ablehnen einer Verbindung mit der zweiten Anwendung durch Reagieren auf die zweite Ablehnungsnachricht durch die erste Anwendung.

5. Anrufsteuerungsverfahren nach einem der vorstehenden Ansprüche, das ferner umfasst:
Anweisen eines Bluetooth-Geräts, eine virtuelle synchronverbindungsorientierte Verbindung mit der Audioverarbeitungsvorrichtung durch die erste Anwendung zu trennen, wobei die Audioverarbeitungsvorrichtung als Reaktion auf das Feststellen, dass die virtuelle synchronverbindungsorientierte Verbindung zwischen der Audioverarbeitungsvorrichtung und dem Bluetooth-Gerät getrennt ist, in einen Leerlaufzustand schaltet.

6. Anrufsteuerungsverfahren, das von einer Audioverarbeitungsvorrichtung durchgeführt wird und umfasst:
Empfangen (S41) einer von einer ersten Anwendung gesendeten Nachricht über einen eingehenden Anruf; und
Rücksenden (S42) einer ersten Reaktionsnachricht an die erste Anwendung auf der Grundlage der Nachricht über einen eingehenden Anruf, wobei die erste Reaktionsnachricht eine erste Antwortnachricht, eine erste Auflegenachricht oder eine erste Ablehnungsnachricht umfasst und die erste Reaktionsnachricht so konfiguriert ist, dass sie die erste Anwendung anweist, einen der ersten Reaktionsnachricht entsprechenden Vorgang auszuführen;
wobei das Empfangen (S41) der von der ersten Anwendung gesendeten Nachricht über einen eingehenden Anruf umfasst:
als Reaktion auf die Nachricht über einen eingehenden Anruf, die von der ersten Anwendung über ein Bluetooth-Gerät gesendet wird, Eintreten in einen Zustand eines eingehenden Anrufs; und
Herstellen einer virtuellen synchronverbindungsorientierten Verbindung zwischen dem Bluetooth-Gerät und der Audioverarbeitungsvorrichtung als Reaktion auf das Feststellen, dass sich das Bluetooth-Gerät und die Audioverarbeitungsvorrichtung im Zustand eines eingehenden Anrufs befinden;
**dadurch gekennzeichnet, dass**
die virtuelle synchronverbindungsorientierte Verbindung sich von einer drahtlosen Verbindung unterscheidet, die zwischen dem Bluetooth-Gerät und der Audioverarbeitungsvorrichtung hergestellt wird, und die virtuelle synchronverbindungsorientierte Verbindung getrennt wird, nachdem die Audioverarbeitungsvorrichtung einen Ablehnungsvorgang oder einen Auflegevorgang ausführt, während die drahtlose Verbindung zwischen dem Bluetooth-Gerät und der Audioverarbeitungsvorrichtung verbunden bleibt.

7. Anrufsteuerungsverfahren nach Anspruch 6, das ferner umfasst:
als Reaktion auf eine von der ersten Anwendung gesendete Antwortanweisung, Umschalten in einen aktiven Zustand, wobei die Audioverarbeitungsvorrichtung in der Lage ist, auf einen Auflegevorgang eines Benutzers im aktiven Zustand zu reagieren.

8. Anrufsteuerungsverfahren nach Anspruch 6 oder 7, das ferner umfasst:
als Reaktion auf die Trennung einer virtuellen synchronverbindungsorientierten Verbindung zwischen dem Bluetooth-Gerät und dem Audioverarbeitungsgerät, Umschalten in einen Leerlaufzustand.

9. Anrufsteuerungsvorrichtung (100), die von einem Endgerät durchgeführt wird und aufweist:
ein Sendemodul (110) für eine Nachricht über einen eingehenden Anruf, das so ausgebildet ist, dass es eine Nachricht über einen eingehenden Anruf über eine erste Anwendung an eine Audioverarbeitungsvorrichtung sendet;
ein Empfangsmodul (120) für eine erste Reaktionsnachricht, das so ausgebildet ist, dass es eine erste Reaktionsnachricht empfängt, die von der Audioverarbeitungsvorrichtung auf der Grundlage der Nachricht über einen eingehenden Anruf durch die erste Anwendung zurückgesendet wird, wobei die erste Reaktionsnachricht eine Antwortnachricht, eine Auflegenachricht oder eine Ablehnungsnachricht umfasst; und
ein Steuerungsmodul (130), das so ausgebildet ist, dass es auf die erste Reaktionsnachricht durch die erste Anwendung reagiert und einen der ersten Reaktionsnachricht entsprechenden Vorgang bei einer zweiten Anwendung ausführt;
wobei das Sendemodul (110) für eine Nachricht über einen eingehenden Anruf aufweist:
ein Sendesubmodul für eine Nachricht über einen eingehenden Anruf, das so ausgebildet ist, dass es die Nachricht über einen eingehenden Anruf an ein Bluetooth-Gerät durch die erste Anwendung sendet, wobei das Bluetooth-Gerät so ausgebildet ist, dass es die Nachricht über einen eingehenden Anruf mit der Audioverarbeitungsvorrichtung synchronisiert; und wobei das Bluetooth-Gerät und die Audioverarbeitungsvorrichtung eine virtuelle synchronverbindungsorientierte Verbindung als Reaktion auf das Feststellen herstellen, dass die Nachricht über einen eingehenden Anruf empfangen wurde;
**dadurch gekennzeichnet, dass**
die virtuelle synchronverbindungsorientierte Verbindung sich von einer drahtlosen Verbindung unterscheidet, die zwischen dem Bluetooth-Gerät und der Audioverarbeitungsvorrichtung hergestellt wird, und die virtuelle synchronverbindungsorientierte Verbindung getrennt wird, nachdem die Audioverarbeitungsvorrichtung einen Ablehnungsvorgang oder einen Auflegevorgang ausführt, während die drahtlose Verbindung zwischen dem Bluetooth-Gerät und der Audioverarbeitungsvorrichtung verbunden bleibt.

10. Anrufsteuerungsvorrichtung (200), die von einer Audioverarbeitungsvorrichtung durchgeführt wird und aufweist:
ein Empfangsmodul für eine Nachricht über einen eingehenden Anruf (210), das so ausgebildet ist, dass es eine von einer ersten Anwendung gesendete Nachricht über einen eingehenden Anruf empfängt; und
ein Sendemodul (220) für eine erste Reaktionsnachricht, das so ausgebildet ist, dass es eine erste Reaktionsnachricht an die erste Anwendung auf der Grundlage der Nachricht über einen eingehenden Anruf zurücksendet, wobei die erste Reaktionsnachricht eine erste Antwortnachricht, eine erste Auflegenachricht oder eine erste Ablehnungsnachricht umfasst und die erste Reaktionsnachricht so konfiguriert ist, dass sie die erste Anwendung anweist, einen der ersten Reaktionsnachricht entsprechenden Vorgang auszuführen;
wobei das Empfangsmodul (210) für eine Nachricht über einen eingehenden Anruf aufweist:
ein Submodul zum Eintreten in einen Zustand eines eingehenden Anrufs, das so ausgebildet ist, dass es als Reaktion auf die Nachricht über einen eingehenden Anruf, die von der ersten Anwendung über ein Bluetooth-Gerät gesendet wird, in einen Zustand eines eingehenden Anrufs eintritt; und
ein Submodul zum Herstellen einer virtuellen synchronverbindungsorientierten Verbindung, das so ausgebildet ist, dass es eine virtuelle synchronverbindungsorientierte Verbindung zwischen dem Bluetooth-Gerät und der Audioverarbeitungsvorrichtung als Reaktion auf das Feststellen herstellt, dass sich das Bluetooth-Gerät und die Audioverarbeitungsvorrichtung im Zustand eines eingehenden Anrufs befinden;
**dadurch gekennzeichnet, dass**
die virtuelle synchronverbindungsorientierte Verbindung sich von einer drahtlosen Verbindung unterscheidet, die zwischen dem Bluetooth-Gerät und der Audioverarbeitungsvorrichtung hergestellt wird, und die virtuelle synchronverbindungsorientierte Verbindung getrennt wird, nachdem die Audioverarbeitungsvorrichtung einen Ablehnungsvorgang oder einen Auflegevorgang ausführt, während die drahtlose Verbindung zwischen dem Bluetooth-Gerät und der Audioverarbeitungsvorrichtung verbunden bleibt.

11. Nicht-transitorisches computerlesbares Speichermedium, das eine Computerprogrammanweisung speichert, wobei ein Prozessor so ausgebildet ist, dass er die Computerprogrammanweisung ausführt, um das Anrufsteuerungsverfahren nach einem der Ansprüche 1 bis 5 oder einem der Ansprüche 6 bis 8 zu implementieren.

12. Chip, der einen Prozessor und eine Schnittstelle aufweist, wobei der Prozessor so ausgebildet ist, dass er das Anrufsteuerungsverfahren nach einem der Ansprüche 1 bis 5 oder einem der Ansprüche 6 bis 8 durch Lesen einer Anweisung ausführt.

## Revendications

1. Procédé de contrôle d'appel, mis en œuvre par un terminal et comprenant:
la transmission (S11) d'un message d'appel entrant à un appareil de traitement audio par l'intermédiaire d'une première application;
la réception (S12) d'un premier message de réponse renvoyé par l'appareil de traitement audio sur la base du message d'appel entrant par l'intermédiaire de la première application, dans lequel le premier message de réponse comprend l'un quelconque d'un premier message de prise d'appel, d'un premier message de raccrochage ou d'un premier message de rejet; et
la réponse (S13) au premier message de réponse par l'intermédiaire de la première application, et l'exécution d'une opération correspondant au premier message de réponse sur une seconde application;
dans lequel la transmission (S11) du message d'appel entrant à l'appareil de traitement audio par l'intermédiaire de la première application comprend:
la transmission du message d'appel entrant à un dispositif Bluetooth par l'intermédiaire de la première application, dans lequel le dispositif Bluetooth est configuré pour synchroniser le message d'appel entrant avec l'appareil de traitement audio; et le dispositif Bluetooth et l'appareil de traitement audio établissent une liaison orientée connexion synchrone virtuelle en réponse à la détermination que le message d'appel entrant est reçu;
**caractérisé en ce que**
la liaison orientée connexion synchrone virtuelle est différente d'une liaison sans fil établie entre le dispositif Bluetooth et l'appareil de traitement audio, et la liaison orientée connexion synchrone virtuelle est déconnectée après que l'appareil de traitement audio exécute une opération de rejet ou une opération de raccrochage, tandis que la liaison sans fil entre le dispositif Bluetooth et l'appareil de traitement audio reste connectée.

2. Procédé de contrôle d'appel selon la revendication 1, dans lequel la réponse (S13) au premier message de réponse par l'intermédiaire de la première application, et l'exécution de l'opération correspondant au premier message de réponse sur la seconde application comprend:
la connexion de la première application avec la seconde application et l'instruction donnée à l'appareil de traitement audio de passer à un état actif en répondant au premier message de prise d'appel par l'intermédiaire de la première application, dans lequel l'appareil de traitement audio est capable de répondre à l'opération de raccrochage d'un utilisateur dans l'état actif;
éventuellement,
la déconnexion de la première application d'avec la seconde application en répondant au premier message de raccrochage par l'intermédiaire de la première application;
éventuellement,
le rejet d'une connexion avec la seconde application en répondant au premier message de rejet par l'intermédiaire de la première application.

3. Procédé de contrôle d'appel selon l'une quelconque des revendications précédentes, comprenant en outre:
la réponse à un second message de réponse par l'intermédiaire de la première application et l'exécution d'une opération correspondant au second message de réponse sur la seconde application, dans lequel le second message de réponse est un message de réponse généré après qu'un utilisateur exécute une opération tactile sur la première application, et le second message de réponse comprend l'un quelconque d'un second message de prise d'appel, d'un second message de raccrochage ou d'un second message de rejet.

4. Procédé de contrôle d'appel selon la revendication 3, dans lequel la réponse au second message de réponse par l'intermédiaire de la première application et l'exécution de l'opération correspondant au second message de réponse sur la seconde application comprend:
la connexion de la première application avec la seconde application et l'instruction donnée à l'appareil de traitement audio de passer à un état actif en répondant au second message de prise d'appel par l'intermédiaire de la première application, dans lequel l'appareil de traitement audio est capable de répondre à une demande de raccrochage de l'utilisateur dans l'état activé;
éventuellement,
la déconnexion de la première application d'avec la seconde application en répondant au second message de raccrochage par l'intermédiaire de la première application;
éventuellement,
le rejet d'une connexion avec la seconde application en répondant au second message de rejet par l'intermédiaire de la première application.

5. Procédé de contrôle d'appel selon l'une quelconque des revendications précédentes, comprenant en outre:
l'instruction donnée à un dispositif Bluetooth de déconnecter une liaison orientée connexion synchrone virtuelle avec l'appareil de traitement audio par l'intermédiaire de la première application, dans lequel l'appareil de traitement audio passe à un état inactif en réponse à la détermination que la liaison orientée connexion synchrone virtuelle entre l'appareil de traitement audio et le dispositif Bluetooth est déconnectée.

6. Procédé de contrôle d'appel, mis en œuvre par un appareil de traitement audio et comprenant:
la réception (S41) d'un message d'appel entrant transmis par une première application; et
le renvoi (S42) d'un premier message de réponse à la première application sur la base du message d'appel entrant, dans lequel le premier message de réponse comprend l'un quelconque d'un premier message de prise d'appel, d'un premier message de raccrochage ou d'un premier message de rejet, et le premier message de réponse est configuré pour instruire la première application d'exécuter une opération correspondant au premier message de réponse;
dans lequel la réception (S41) du message d'appel entrant transmis par la première application comprend:
en réponse au message d'appel entrant transmis par la première application par l'intermédiaire d'un dispositif Bluetooth, le passage dans un état d'appel entrant; et
l'établissement d'une liaison orientée connexion synchrone virtuelle entre le dispositif Bluetooth et l'appareil de traitement audio en réponse à la détermination que le dispositif Bluetooth et l'appareil de traitement audio sont dans l'état d'appel entrant;
**caractérisé en ce que**
la liaison orientée connexion synchrone virtuelle est différente d'une liaison sans fil établie entre le dispositif Bluetooth et l'appareil de traitement audio, et la liaison orientée connexion synchrone virtuelle est déconnectée après que l'appareil de traitement audio exécute une opération de rejet ou une opération de raccrochage, tandis que la liaison sans fil entre le dispositif Bluetooth et l'appareil de traitement audio reste connectée.

7. Procédé de contrôle d'appel selon la revendication 6, comprenant en outre:
en réponse à une instruction de prise d'appel transmise par la première application, le passage à un état actif, dans lequel l'appareil de traitement audio est capable de répondre à une opération de raccrochage d'un utilisateur dans l'état actif.

8. Procédé de contrôle d'appel selon la revendication 6 ou 7, comprenant en outre:
en réponse à la déconnexion d'une liaison orientée connexion synchrone virtuelle entre le dispositif Bluetooth et l'appareil de traitement audio, le passage à un état inactif.

9. Appareil de contrôle d'appel (100), réalisé par un terminal et comprenant:
un module de transmission de message d'appel entrant (110) configuré pour transmettre un message d'appel entrant à un appareil de traitement audio par l'intermédiaire d'une première application;
un module de réception de premier message de réponse (120) configuré pour recevoir un premier message de réponse renvoyé par l'appareil de traitement audio sur la base du message d'appel entrant par l'intermédiaire de la première application, dans lequel le premier message de réponse comprend l'un quelconque d'un message de prise d'appel, d'un message de raccrochage ou d'un message de rejet; et
un module de contrôle (130) configuré pour répondre au premier message de réponse par l'intermédiaire de la première application, et exécuter une opération correspondant au premier message de réponse sur une seconde application;
dans lequel le module de transmission de message d'appel entrant (110) comprend:
un sous-module de transmission de message d'appel entrant configuré pour transmettre le message d'appel entrant à un dispositif Bluetooth par l'intermédiaire de la première application, dans lequel le dispositif Bluetooth est configuré pour synchroniser le message d'appel entrant avec l'appareil de traitement audio; et le dispositif Bluetooth et l'appareil de traitement audio établissent une liaison orientée connexion synchrone virtuelle en réponse à la détermination que le message d'appel entrant est reçu;
**caractérisé en ce que**
la liaison orientée connexion synchrone virtuelle est différente d'une liaison sans fil établie entre le dispositif Bluetooth et l'appareil de traitement audio, et la liaison orientée connexion synchrone virtuelle est déconnectée après que l'appareil de traitement audio exécute une opération de rejet ou une opération de raccrochage, tandis que la liaison sans fil entre le dispositif Bluetooth et l'appareil de traitement audio reste connectée.

10. Appareil de contrôle d'appel (200), réalisé par un appareil de traitement audio et comprenant:
un module de réception de message d'appel entrant (210) configuré pour recevoir un message d'appel entrant transmis par une première application; et
un module de transmission de premier message de réponse (220) configuré pour renvoyer un premier message de réponse à la première application sur la base du message d'appel entrant, dans laquelle le premier message de réponse comprend l'un quelconque d'un premier message de prise d'appel, d'un premier message de raccrochage ou d'un premier message de rejet, et le premier message de réponse est configuré pour instruire la première application d'exécuter une opération correspondant au premier message de réponse;
dans lequel le module de réception de message d'appel entrant (210) comprend:
un sous-module de passage dans un état d'appel entrant configuré pour passer dans un état d'appel entrant en réponse au message d'appel entrant transmis par la première application par l'intermédiaire d'un dispositif Bluetooth; et
un sous-module d'établissement de liaison orientée connexion synchrone virtuelle configuré pour établir une liaison orientée connexion synchrone virtuelle entre le dispositif Bluetooth et l'appareil de traitement audio en réponse à la détermination que le dispositif Bluetooth et l'appareil de traitement audio sont dans l'état d'appel entrant;
**caractérisé en ce que**
la liaison orientée connexion synchrone virtuelle est différente d'une liaison sans fil établie entre le dispositif Bluetooth et l'appareil de traitement audio, et la liaison orientée connexion synchrone virtuelle est déconnectée après que l'appareil de traitement audio exécute une opération de rejet ou une opération de raccrochage, tandis que la liaison sans fil entre le dispositif Bluetooth et l'appareil de traitement audio reste connectée.

11. Support de stockage non transitoire lisible par ordinateur, stockant une instruction de programme informatique, dans lequel un processeur est configuré pour exécuter l'instruction de programme informatique pour exécuter le procédé de contrôle d'appel selon l'une quelconque des revendications 1 à 5 ou l'une quelconque des revendications 6 à 8.

12. Puce, comprenant un processeur et une interface, dans laquelle le processeur est configuré pour exécuter le procédé de contrôle d'appel selon l'une quelconque des revendications 1 à 5 ou l'une quelconque des revendications 6 à 8 par lecture d'une instruction.
